(19) Europäisches Patentamt

European Patent Office

Office européen des brevets

(11) EP 1 058 087 B1

(12) EUROPÄISCHE PATENTSCHRIFT

(45) Veröffentlichungstag und Bekanntmachung des Hinweises auf die Patenterteilung:
**12.12.2001  Patentblatt 2001/50**

(51) Int Cl.⁷: **G01B 11/02**, G01D 5/34, B65H 23/02

(21) Anmeldenummer: **00110943.8**

(22) Anmeldetag: **25.05.2000**

(54) **Lageerfassung einer Kante mit verteilten Sensoren durch Wendepunktsbestimmung**

Position recording of an edge with distributed sensors by determining the turning point

Détermination de la position d'un bord avec des capteurs répartis par la détermination du point tournant

(84) Benannte Vertragsstaaten:
**CH DE FR IT LI**

(30) Priorität: **29.05.1999  DE 19924798**

(43) Veröffentlichungstag der Anmeldung:
**06.12.2000  Patentblatt 2000/49**

(73) Patentinhaber: **ERHARDT + LEIMER GmbH**
**D-86157 Augsburg (DE)**

(72) Erfinder:
• **Alt, Gerhard**
**86507 Kleinaitingen (DE)**
• **Brunner, Gerhard**
**86179 Augsburg (DE)**

• **Häussler, Harald**
**86169 Augsburg (DE)**
• **Seibold, Hans**
**86420 Anhausen (DE)**

(74) Vertreter: **Sasse, Volker, Dipl.-Ing. et al**
**Parreutstrasse 27**
**85049 Ingolstadt (DE)**

(56) Entgegenhaltungen:
**EP-A- 0 392 085       EP-A- 0 532 933**
**DE-A- 3 317 057       DE-A- 3 423 308**
**DE-A- 4 203 947       DE-C- 19 500 822**
**US-A- 3 907 439**

**Beschreibung**

Die Erfindung betrifft ein Verfahren zum Erfassen der Lage einer laufenden Warenbahn gemäß dem Oberbegriff des Patentanspruchs 1 sowie eine Vorrichtung zur Durchführung dieses Verfahrens gemäß dem Oberbegriff des Patentanspruchs 9.

Aus der DE 34 23 308 C2 ist eine fotoelektronische Fühleinrichtung bekannt, bei der eine Lichtquelle mehreren, unabhängig voneinander wirkenden Empfängerteilen gegenüberliegt. Die Empfängerteile werden von Halbleiter-Fotoelementen gebildet, die optisch an lichtsammelnden Kunststoffflächen angekoppelt sind. Jedes dieser Empfängerteile erfaßt einen bestimmten Bereich der Warenbahn, wobei das Fotoelement ein zur Bedeckung durch die Warenbahn proportionales Signal abgibt. Die Warenbahn-Kantenposition wird durch Vergleich der von den Fotoelementen abgegebenen Signale mit einem Schwellwert ermittelt. Dies hat jedoch den Nachteil, daß die mit dieser Fühleinrichtung erzielbare Auflösung im wesentlichen der Breite der Kunststoffplatten entspricht. Zur Erzielung einer hohen Auflösung bei gleichzeitig großem Meßbereich ist daher eine sehr große Anzahl an Fotoelementen erforderlich. Außerdem ist in diesem Fall eine sehr große Anzahl an Fotoelementen in jedem Meßzyklus abzufragen.

Aus der DE 42 09 546 C2 ist eine Vorrichtung zum Ermitteln der Lage der Kante einer laufenden Materialbahn bekannt, bei der mehreren, getrennt ansteuerbaren Lichtquellen jeweils ein Empfängerteil gegenüberliegt. Diese Empfängerteile geben ein zur Bedeckung der Warenbahn proportionales Signal ab, das mit einem Schwellwert verglichen wird. Das Vergleichsergebnis wird einem Mikrocomputer zugeführt, der in Abhängigkeit vom Vergleichsergebnis die Lichtquellen und Empfängerteile entsprechend einer sukzessiven Approximation ansteuert und auf diese Weise die Position der Warenbahnkante ermittelt. Zur Durchführung der sukzessiven Approximation muß eine Anzahl von Vergleichswerten der Empfängerteile mit dem Schwellwert in einer Speichereinheit des Mikrocomputers gespeichert werden.

Der Erfindung liegt die Aufgabe zugrunde, ein Verfahren der eingangs genannten Art zu schaffen, das eine hohe Auflösung bei kurzer Meßzeit erzielt. Außerdem soll eine kostengünstige Vorrichtung zur Durchführung dieses Verfahrens geschaffen werden.

Diese Aufgabe wird mit den Verfahrensschritten des Patentanspruchs 1 sowie mit den Merkmalen des Patentanspruchs 9 gelöst.

Bei dem Verfahren gemäß Anspruch 1 wird die Warenbahn von mehreren, quer zur Bahnlaufrichtung verteilten Sensoren abgetastet. Jeder Sensor erzeugt dabei ein Signal, das von der Abdeckung des Sensors durch die Warenbahn abhängig ist. Vorzugsweise ist das vom Sensor erzeugte Signal proportional zur Abdeckung durch die Warenbahn. Damit liefert jeder Sensor ein von der Lage der Warenbahnkante abhängiges Signal, wobei die einzelnen Sensoren in unterschiedlichen Bereichen in Meßrichtung angeordnet sind.

Vorzugsweise erfolgt die Abtastung der Warenbahn berührungslos, damit selbst empfindliche Warenbahnen nicht durch die Sensoren beschädigt werden. Außerdem wird auf diese Weise verhindert, daß die Sensoren selbst die Kantenerfassung stören, wie dies beispielsweise bei einem mechanischen Kantensensor der Fall ist, der mit Federkraft gegen die Bahnkante drückt. Bei etwa mittlerer Lage der Warenbahnkante sind die von der Bahnmitte aus betrachteten inneren Sensoren vollständig durch die Warenbahn abgedeckt, so daß diese Sensoren ein konstantes Ruhesignal abgeben. Die äußeren Sensoren sind dem gegenüber durch die Bahn in keiner Weise abgedeckt, so daß sie ein maximales Signal erzeugen. Die Sensoren im Bereich um die Warenbahnkante liefern Signale, die zwischen dem Ruhesignal und dem maximalen Signal liegen. Die Funktion der von den Sensoren erzeugten Signale von den Sensororten weist daher bei etwa mittlerer Kantenlage zwei konstante Bereiche unterschiedlicher Signalhöhe auf, zwischen denen ein stetiger Übergangsbereich vorgesehen ist. Bei extremer Lage der Warenbahnkante im Bereich des innersten oder äußersten Sensors kann einer der konstanten Bereiche auch fehlen, so daß eine Kantenbestimmung über Schwellwerte in diesem Fall sehr ungenau wird. Erfindungsgemäß wird daher vorgeschlagen, die Kantenposition aus dem Wendepunkt der Funktion der von den Sensoren erzeugten Signale von den Sensororten zu bestimmen. Dieser Wendepunkt ist auch bei extremer Lage der Bahnkante bestimmbar, selbst wenn die Sensorsignale bei vollständiger Abdeckung oder vollständiger Freigabe eines Sensors durch die Warenbahn nicht mehr ermittelt werden können. Vorzugsweise sind die einzelnen Sensoren äquidistant quer zur Warenbahnlaufrichtung verteilt, so daß der Sensorort besonders einfach durch Numerieren der Sensoren bestimmt werden kann. Damit kann die Ermittlung des Wendepunktes auch aus der Funktion der Sensorsignale von der Sensornummer bestimmt werden, wobei das Ergebnis der Wendepunktsuche in diesem Fall mit dem gegenseitigen Abstand der Sensoren zu multiplizieren ist. Allgemein kann der Wendepunkt auch aus einer Funktion der Sensorsignale von Werten, die zu den Sensororten proportional sind, bestimmt werden. Um eine korrekt skalierte Bahnkantenposition zu erhalten, muß der ermittelte Wendepunkt anschließend mit dem Proportionalitätsfaktor multipliziert werden. In jenen Fällen, in denen lediglich ein zur Kantenposition proportionales Signal benötigt wird, was beispielsweise bei Bahnführungseinrichtungen der Fall ist, kann auf eine entsprechende Korrektur des ermittelten Wendepunktes auch verzichtet werden.

Bei dem Verfahren gemäß Anspruch 2 integriert der Sensor sein Signal aus einem vorgegebenen Bereich, so daß kleinflächige Ablagerungen auf der Sensorfläche nur noch geringen Einfluß auf das vom Sensor erzeugte Signal haben. Dies ist insbesondere bei stark fusselnden Warenbahnen wichtig, da sich von der Warenbahn stammende Fusseln direkt auf der Sensorfläche ablagern können. Hätten die Sensoren eine wirksame Breite unterhalb ca. 1 mm, so könnte jeder einzelne Fussel eine vollständige Abdeckung eines Sensors hervorrufen, was irrtümlich als Warenbahnkante gedeutet würde. Durch die großflächige Ausbildung der wirksamen Sensorfläche können abgelagerte Fusseln lediglich zu einer gleichmäßigen Dämpfung der Signale aller Sensoren führen, was jedoch auf die Lage des Wendepunktes keinerlei Einfluß hat. Damit wird durch diese Maßnahme eine erhöhte Schmutzunempfindlichkeit der Kantenfühleinrichtung erreicht. Da der Wendepunkt wesentlich genauer bestimmt werden kann als der Abstand der einzelnen Sensoren, geht diese Maßnahme auch nicht zu Lasten der Genauigkeit der Kantenbestimmung.

Die in Anspruch 3 vorgeschlagenen Methoden zur Erfassung der Warenbahnabdeckung arbeiten berührungslos und stören demnach in keiner Weise den Bahnlauf. Außerdem können auf diese Weise auch besonders empfindliche Warenbahnen sicher erfaßt werden, ohne daß die Gefahr einer Beschädigung der Warenbahn oder einer Meßwertverfälschung besteht. Eine optische Erfassung der Warenbahnabdeckung erfolgt entweder im Reflexionsverfahren oder im Lichtschrankenprinzip. Dabei wird die Warenbahn von mindestens einer Lichtquelle beleuchtet, wobei lichtempfindliche Empfänger entweder an der der Warenbahn gegenüberliegenden Seite oder neben der Lichtquelle vorgesehen sind. Alternativ könnte die Warenbahnabdeckung auch auf pneumatischem Wege mittels Luftstrahlen abgetastet werden, wobei in diesem Fall druckempfindliche Sensoren vorzusehen sind. Bei einer akustischen Abtastung der Warenbahn werden Schallwellen gegen die Warenbahn gerichtet, die von Mikrophonen erfaßt werden.

Eine besonders einfache und damit störsichere Erfassung des Wendepunktes ergibt sich aus Anspruch 4. Dabei wird die Funktion der Signale vom Sensorort zweimal numerisch differenziert und aus der zweiten Ableitungsfunktion eine Nullstelle ermittelt. Die der Kantenposition entsprechende Nullstelle der zweiten Ableitung befindet sich im Bereich der größten Steigung, also bei einem Maximalwert der ersten Ableitung. Aus diesen Bedingungen kann die Kantenposition mit geringem Rechenaufwand genau ermittelt werden.

Alternativ kann der Wendepunkt gemäß Anspruch 5 auch durch einfaches numerisches Differenzieren und numerisches Suchen des Maximums der ersten Ableitungsfunktion bestimmt werden. Auf diese Weise wird eine zweite Differenziation eingespart, wobei jedoch die Suche des Maximums der ersten Ableitungsfunktion numerisch aufwendiger ist. Diese Methode hat jedoch den Vorteil, daß die Bedingung, das absolute Maximum zu suchen, ohne weitere Nebenbedingung die Lage der Bahnkante liefert.

Als weitere Alternative wird gemäß Anspruch 6 vorgeschlagen, an die von den Sensoren erzeugte Funktion der Signale vom Sensorort eine Fitfunktion anzunähern, wobei der Wendepunkt unmittelbar aus den Fitparametern berechnet wird. Die Annäherung der Fitfunktion an die Signale der Sensoren erfolgt vorzugsweise nach der Methode der Minimierung der Quadrate der Abweichungen der Signale von den entsprechenden Funktionswerten der Fitfunktion. Der Wendepunkt kann im allgemeinen analytisch durch zweimaliges Differenzieren und Nullsetzen der Fitfunktion berechnet werden, so daß je nach Fitfunktion eine mehr oder weniger einfache Formel zur Berechnung des Wendepunktes aus den Fitparametern angegeben werden kann.

Vorzugsweise wird als Fitfunktion gemäß Anspruch 7 ein Polynom eingesetzt, dessen Koeffizienten die Fitparameter sind. Aus diesem Polynom läßt sich sehr einfach die zweite Ableitung analytisch berechnen, so daß aus den Polynom-Koeffizienten direkt der Wendepunkt ermittelt werden kann.

Gemäß Anspruch 8 wird vorgeschlagen, die Signale der einzelnen Sensoren durch das Signal eines Referenz-Sensors zu dividieren. Durch diese Maßnahme können Meßfehler, die beispielsweise von einer sich ändernden Beleuchtungsstärke des Senders herrühren, eliminiert werden. Werden die Signale des Sensors und des Referenzsensors zeitnah erfaßt, so können auch kurzzeitige Schwankungen des Senders ausgeglichen werden. Vorzugsweise wird jeweils ein Sensor alternierend mit dem Referenzsensor abgefragt, um Senderschwankungen möglichst optimal auszugleichen.

Die Vorrichtung gemäß Anspruch 9 hat sich zur Durchführung des erfindungsgemäßen Verfahrens besonders bewährt. Diese Vorrichtung weist mehrere Sensoren auf, die jeweils ein von der Bedeckung der Bahn abhängiges Signal erzeugen. Diese Sensoren sind vorzugsweise quer zur Bahnlaufrichtung in Reihe nebeneinandergesetzt. Alternativ könnten sie auch zickzackartig zueinander versetzt angeordnet sein. Wichtig ist, daß die einzelnen Sensoren von einer feststehend gedachten Bahnkante unterschiedliche Abstände aufweisen. Dadurch wird erreicht, daß jeder Sensor in einem bestimmten Breitenbereich auf Änderungen der Bahnkante reagiert. Wird der Sensor dagegen vollständig von der Bahn abgedeckt, so erzeugt er lediglich ein Ruhesignal. Wird der Sensor von der Bahn überhaupt nicht abgedeckt, so erzeugt er ein maximales aktives Signal. Die einzelnen Sensoren sind über Schaltmittel mit einem Analog-Digital-Umsetzer verbunden. Durch diese Schaltmittel wird erreicht, daß die Signale der einzelnen Sensoren nacheinander abgefragt und in einen Digitalwert umgewandelt werden können. Diese Schaltmittel stehen mit Speichermitteln in Wirkverbindung, in denen die digitalisierten Werte gespeichert werden. Auf diese Speichermittel kann ein Wendepunkt-Detektor zugreifen, der aus der Funktion der digitalisierten Werte von den Sensororten einen Wendepunkt ermittelt. Der vom Wendepunkt-Detektor errechnete Digitalwert wird an einem Digitalausgang ausgegeben und steht damit weiteren Vorrichtungen, wie Bahnkantenreglern oder Anzeigeinstrumenten zur Verfügung.

Um die gewünschte integrierende Wirkung der einzelnen Sensoren mit einfachsten Mitteln sicherzustellen, wird gemäß Anspruch 10 vorgeschlagen, den Sensor als Fotodetektor mit zugeordneter Platte aus lichtsammelndem Kunststoff auszubilden. In der Kunststoffplatte ist ein fluoreszierender Stoff enthalten, der das von der Lichtquelle ankommende Licht in langwelligeres Licht umwandelt, das sich bevorzugt in der Plattenebene ausbreitet. Der Fotodetektor wird stirnseitig an die Platte angekoppelt, so daß er ein sehr starkes und damit störunempfindliches Lichtsignal empfängt. Durch das Auftreten von Totalreflexionen des Lichts an den Plattenflächen verteilt sich das Licht gleichmäßig über die gesamte Platte, so daß der Sensor ein zur Abdeckung durch die Warenbahn exakt proportionales Signal liefert. Es spielt dabei keine Rolle, ob das Licht gleichmäßig verteilt oder nur an einer bestimmten Stelle in die Kunststoffplatte eindringt.

Insbesondere bei großem Abstand zwischen der Lichtquelle und den Sensoren wird die Erfassung der Bahnkante durch schräg zur Warenbahnebene gerichtete Lichtstrahlen beeinträchtigt. In diesem Fall ist es gemäß Anspruch 11 vorteilhaft, zwischen der Lichtquelle und den Sensoren ein die Lichtstrahlen parallelisierendes Element vorzusehen. Dieses Element ist im einfachsten Fall ein Körper mit einer Vielzahl von senkrecht zur Warenbahn ausgerichteten Flächen. Beispielsweise könnte das Element von Rohrstükken, zueinander parallelen Wänden oder einer Wabenstruktur gebildet sein. Alternativ könnte das Element von einer Reihe von Linsen oder einem Bündel Glas- oder Kunststoffasern gebildet sein. Wichtig ist lediglich, daß die Lichtstrahlen, in Erfassungsrichtung der Vorrichtung gesehen, parallel zueinander ausgerichtet sind. In Warenbahnlaufrichtung gesehen, spielen dagegen unterschiedliche Strahlrichtungen des Lichtes nur eine untergeordnete Rolle.

Eine besonders einfache Realisierung der Schaltmittel zur zeitlich versetzten Abfrage der Sensoren ergibt sich aus Anspruch 12 in Form eines Analogmultiplexers. Ein Analogmultiplexer ist als integrierte Schaltung verfügbar und damit unempfindlich gegenüber Chemikalien und erhöhten Temperaturen, wie sie bei der Bearbeitung von textilen Warenbahnen auftreten. Damit die von den Sensoren erzeugten Signale durch den nicht vernachlässigbaren On-Widerstand des Analogmultiplexers nicht verfälscht werden, werden die Signale nicht als Spannungs-, sondern als Strom-Werte übertragen. Um eine nachfolgende Analog-Digital-Wandlung zu ermöglichen, ist dem Analogmultiplexer ein Strom-Spannungs-Wandler nachgeordnet, der eine dem Sensorstrom proportionale Spannung erzeugt.

Insbesondere beim Einsatz in sehr heißer Umgebung muß die Vorrichtung eine gewisse Wärmeausdehnung verkraften können. Da die einzelnen Komponenten der Vorrichtung von unterschiedlichen Materialien gebildet werden, ist es in diesem Fall erforderlich, die empfindlichen Platinen, auf denen die Sensorelektronik aufgebracht ist, um ein gewisses Maß dehnbar zu gestalten. Es wird deshalb gemäß Anspruch 13 vorgeschlagen, die Platinen, die die Sensoren tragen, wenigstens teilweise flexibel auszubilden. Es ist dabei vorstellbar, die gesamten Sensoren auf mindestens einer, über ihre gesamte Länge flexible Platine aufzubauen. Alternativ können die Sensoren auch modulartig auf harten Platinen untergebracht werden, wobei zwischen den einzelnen Modulen jeweils eine flexible Verbindung, beispielsweise in Form von Kabeln, vorgesehen ist.

Der Wendepunkt-Detektor stellt eine schaltungstechnisch aufwendige Vorrichtung dar, so daß es gemäß Anspruch 14 günstig ist, diesen als Controller auszubilden. Damit können die erforderlichen Rechenschritte durch ein entsprechendes Betriebsprogramm realisiert werden, so daß sich der schaltungstechnische Aufwand in vertretbaren Grenzen hält. Vorzugsweise ist auch der erforderliche Analog-Digital-Umsetzer als Teil des Controllers ausgebildet, wodurch sich der schaltungstechnische Aufwand noch weiter verringert.

Schließlich ist es gemäß Anspruch 15 vorteilhaft, dem Wendepunkt-Detektor mindestens einen Digital-Analog-Umsetzer nachzucrdnen, der ggf. ebenfalls als Teil des Controllers ausgebildet sein kann. Der Digital-Analog-Umsetzer erzeugt ein dem Wendepunkt und damit der Kantenposition proportionales Analog-Signal, das direkt einem Bahnkanten-Regler zugeführt werden kann.

Der Erfindungsgegenstand und das erfindungsgemäße Verfahren werden anhand der Zeichnung beispielhaft beschrieben, ohne den Schutzumfang zu beschränken.

Es zeigt:

Figur 1 eine Schnittdarstellung durch eine Vorrichtung zur Kantenerfassung einer Warenbahn,

Figur 2 ein Prinzip-Schaltbild der Vorrichtung gemäß Figur 1,

Figur 3 eine Darstellung der Sensorsignale als Funktion der Sensororte,

Figur 4 einen Algorithmus zur Kantenbestimmung und

Figur 5 einen alternativen Algorithmus zur Kantenbestimmung.

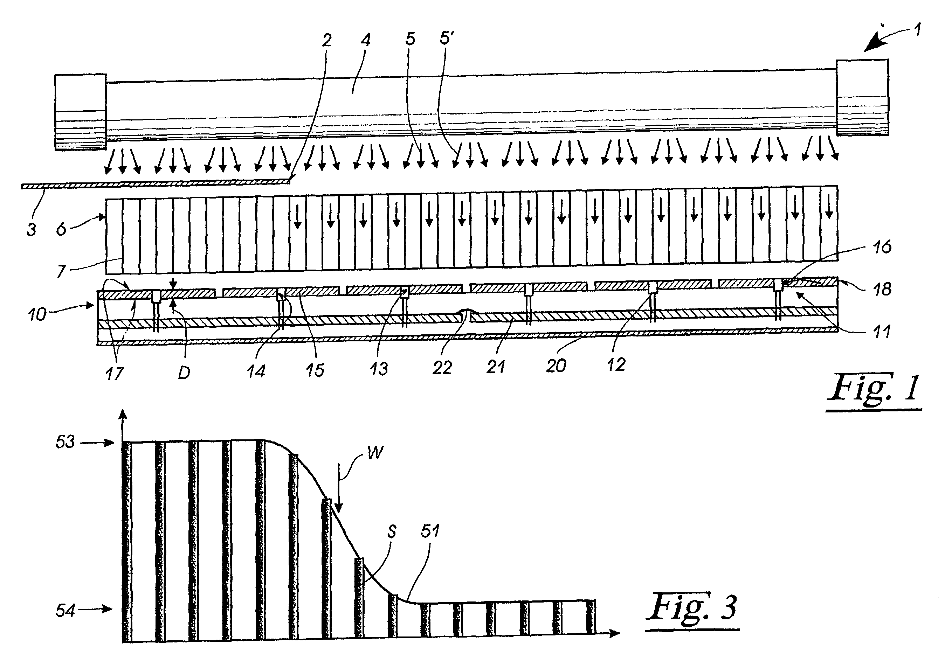

Figur 1 zeigt eine Schnittdarstellung einer Vorrichtung 1 zur Lageerfassung einer Kante 2 von einer Warenbahn 3. Die Vorrichtung 1 weist eine Lichtquelle 4 in Form einer Leuchtstoffröhre auf, die Lichtstrahlen 5, 5' gegen die Warenbahn 3 aussendet. Je nach Lage der Kante 2 der Warenbahn 3 wird ein kleinerer oder größerer Anteil der Lichtstrahlen 5, 5' von der Warenbahn 3 absorbiert oder reflektiert, während der andere Teil der Lichtstrahlen 5, 5' durch die Warenbahn 3 in keiner Weise beeinflußt wird.

Die Lichtstrahlen 5, 5' passieren anschließend ein optisches Element 6, das von mehreren senkrecht zur Warenbahn 3 ausgerichteten Wänden 7 gebildet ist. Lichtstrahlen 5', die im Winkel zu den Wänden 7 verlaufen, werden von den Wänden 7 absorbiert, so daß lediglich jene Lichtstrahlen 5 das optische Element 6 passieren können, die annähernd senkrecht zur Warenbahn 3 verlaufen. Auf diese Weise wird eine scharfe Kantenabbildung durch die Lichtstrahlen 5 erreicht.

Nach dem Passieren des optischen Elements 6 treffen die Lichtstrahlen 5 auf eine Sensoreinheit 10, die von mehreren Sensoren 11 gebildet ist. Jeder Sensor 11 besteht aus einem lichtempfindlichen Element in Form einer Fotodiode 12, wobei eine lichtempfindliche Fläche 13 der Fotodiode 12 in einer Bohrung 14 einer Kunststoffplatte 15 vorgesehen ist. Die Dicke D der Kunststoffplatte 15 ist dabei an die Höhe der lichtempfindlichen Fläche 13 der Fotodiode 12 angepaßt.

In der Kunststoffplatte 15 ist ein fluoreszierender Farbstoff eingebaut, der die einfallenden Lichtstrahlen 5 in langwelligere Lichtstrahlen 16 umwandelt. Diese langwelligen Lichtstrahlen 16 breiten sich bevorzugt annähernd in der Ebene der Kunststoffplatte 15 aus und werden daher an den oberen und unteren Grenzflächen 17 der Kunststoffplatte 15 total reflektiert. Die langwelligen Lichtstrahlen 16 treten daher vornehmlich an den Stirnflächen 18 sowie an der Wand der Bohrung 14 aus der Kunststoffplatte 15 aus. Dies gewährleistet, daß ein verhältnismäßig großer Anteil des in die Kunststoffplatte 15 einfallenden Lichtes 5 die lichtempfindliche Fläche 13 der Fotodiode 12 erreicht, so daß diese einen entsprechend hohen Fotostrom abgibt. Dies reduziert die Störempfindlichkeit der Vorrichtung 1, wobei die einzelnen Sensoren eine vorteilhafte integrierende Wirkung über die Plattenfläche von vorzugsweise ca. 15 cm$^2$ aufweisen. Die Sensoren sind deshalb unempfindlich gegen punktuelle Verschmutzung.

Die Kunststoffplatten 15 sind auf einem gemeinsamen Träger 11 gehalten, der vorzugsweise gegenüber der Warenbahn 3 abgedichtet ist. Dies ist insbesondere in jenen Fällen wichtig, in denen die Vorrichtung 1 im Naßbereich eingesetzt wird, wo die Warenbahn 3 zum Teil mit ätzenden Chemikalien behandelt wird. Der dichte Abschluß des Trägers 20 gegenüber der Warenbahn 3 sorgt für einen ausreichenden Schutz der Sensoreinheit 10 gegenüber den Chemikalien.

Die Fotodioden 12 sind auf Platinen 21 aufgelötet, die im Gegensatz zum Träger 20 aus mehreren Einzelteilen zusammengesetzt sind. Dies hat zum einen den Vorteil einer einfacheren Herstellung der Platinen 21, insbesondere für große Sensorlängen. Zum anderen können sich die Platinen 21 gegenüber dem Träger 20 um ein gewisses Maß ausdehnen, ohne die empfindliche Leiterbahnschicht auf den Platinen 21 zu beschädigen. Dies ist insbesondere in jenen Fällen wichtig, in denen die Vorrichtung 1 einer erhöhten Temperatur, beispielsweise bis 105° C, ausgesetzt ist. Die Verbindung zwischen den einzelnen Platinen 21 erfolgt im einfachsten Fall durch einen flexiblen Abschnitt 22 in Form eines mehradrigen Kabels. Alternativ könnte auch die gesamte Platine 21 aus flexiblen Material, wie einer kupferkaschierten Folie, hergestellt sein.

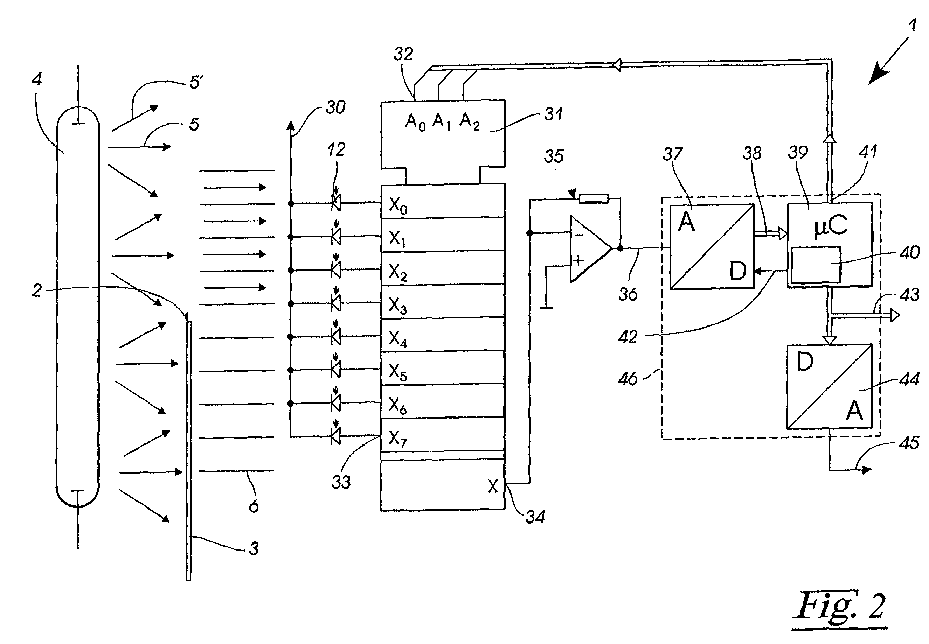

Figur 2 zeigt einen schematischen Schaltplan der Vorrichtung 1. Das von der Lichtquelle 4 ausgesendete Licht 5 passiert die Warenbahn 3, sowie das optische Element 6 und wird von Fotodioden 12 detektiert. Die Fotodioden 12 sind kathodenseitig an einer Referenzspannungsquelle 30 angeschlossen, um an den Fotodioden 12 eine ausreichende Sperrspannung anzulegen. Alternativ könnten die Fotodioden 12 auch als Fotoelemente geschaltet sein, wobei dann zur Unterdrückung kapazitiver Stromspitzen Widerstände zu diesen parallel geschaltet sind.

Die Fotodioden 12 sind anodenseitig mit einem Analogmultiplexer 31 verbunden, der entsprechend den logischen Pegeln an seinen Adreßeingängen 32 einen ausgewählten Eingang 33 mit einem Ausgang 34 verbindet. Der Ausgang 34 des Analogmultiplexers 31 ist mit einem Strom-Spannungs-Wandler 35 verbunden, der den Ausgang 34 des Analogmultiplexers 31 auf Masse zieht. Damit kann die aufgrund der Pegel an den Adreßeingängen 32 ausgewählte Fotodiode 12 ihren Fotostrom über den Analogmultiplexer 31 in den Strom-Spannungs-Wandler 35 leiten, der diesen Fotostrom in eine hierzu proportionale Spannung umwandelt. Durch diesen Aufbau ist sichergestellt, daß der nicht vernachlässigbare On-Widerstand des Analogmultiplexers 31 keinerlei Einfluß auf das von der Fotodiode 12 erzeugte Fotosignal hat.

Ein Ausgang 36 des Strom-Spannungs-Wandlers 35 ist mit einem Analog-Digital-Umsetzer 37 verbunden, der einen dem Fotostrom entsprechenden Digitalwert erzeugt. Diese Digitalwerte gelangen über einen Signalweg 42 in einen Mikrocontroller 39, der die einzelnen Digitalwerte zunächst in einer Speichereinheit 40 ablegt.

Im Mikrocontroller 39 ist ein Betriebsprogramm abgelegt, das Adressen für den Analogmultiplexer 31 erzeugt und diese an einen Adreßausgang 41 anlegt. Außerdem sorgt dieses Betriebsprogramm für die Ansteuerung des Analog-Digital-Umsetzers 37 über den Signalweg 42 und den Empfang der digitalisierten Werte über den Signalweg 38. Das Betriebsprogramm des Mikrocontrollers bewirkt außerdem die Ablage der digitalisierten Werte in der Speichereinheit 40 und die Berechnung eines Wendepunktes aus den gespeicherten Daten. Schließlich sorgt das Betriebsprogramm für eine Ausgabe des ermittelten Wendepunktes an einem Ausgang 43 und für die Ansteuerung eines Digital-Analog-Umsetzers 44, der den Digitalwert am Ausgang 43 in eine Analogspannung umsetzt und an einem Analogausgang 45 ausgibt. Der am Digitalausgang 43 und am Analogausgang 45 anstehende Wert entspricht der Position der Kante 2 der Warenbahn 3 und kann von weiteren Vorrichtungen, wie beispielsweise Kantenreglern oder Anzeigeeinheiten, benutzt werden.

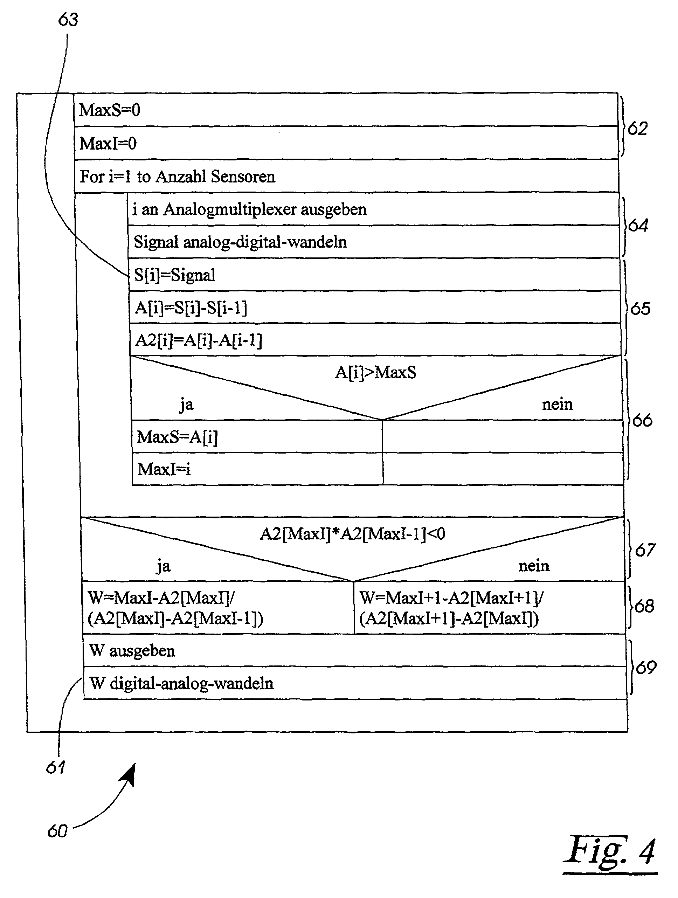

Figur 3 zeigt eine schematische Darstellung der von den Sensoren 11 ermittelten Signale S als Funktion des jeweiligen Sensorortes. Die Signale S der einzelnen Sensoren sind jeweils als Balken dargestellt. Die Signale S ergeben zusammen eine Funktion 51 vom jeweiligen Sensorort, die in Form einer Kurve dargestellt ist. Bestimmt man von dieser Funktion 51 einen Wendepunkt W, so ergibt dieser mit ausreichender Genauigkeit die Lage der Kante 2 der Warenbahn 3, wobei der Wendepunkt W unabhängig vom maximalen Signal 53 und vom Ruhesignal 54 ist.

Figur 4 zeigt eine erste Variante eines Algorithmus 60 für das Betriebsprogramm des Mikrocontrollers 39. Da die Vorrichtung 1 periodisch die Kante 2 der Warenbahn 3 bestimmen soll, ist das Betriebsprogramm in Form einer Endlosschleife 61 ausgebildet. Am Beginn der Endlosschleife 61 erfolgt eine Initialisierung 62 der Variablen MaxS und MaxI.

Nach der Initialisierung 62 folgt eine Zählschleife 63, die für jeden einzelnen Sensor 11 einmal durchlaufen wird. In der Zählschleife 63 wird zunächst eine Messung 64 durchgeführt, in dem die Zählvariable i an den Analogmultiplexer 31 als Adresse ausgegeben und der am Analog-Digital-Umsetzer 37 anliegende Spannungswert S gewandelt wird.

Der gemessene Spannungswert S wird anschließend gespeichert 65, wobei durch Berechnung der Differenzen benachbarter Werte die erste A und zweite Ableitung A2 der Spannungswerte S berechnet wird. Dabei ist vorausgesetzt, daß die einzelnen Sensoren 11 zueinander im jeweils gleichen Abstand angeordnet sind. Damit ist der Abstand der Sensoren 11 voneinander lediglich ein für die Bildung der ersten A und zweiten Ableitung A2 konstanter Faktor, so daß dieser Abstand unberücksichtigt bleiben kann.

Nach dem Speichern 65 der Spannungswerte S erfolgt eine Maximumsuche 66 der ersten Ableitung A. Hierzu wird der ermittelte Wert der ersten Ableitung A [i] mit der variablen MaxS verglichen und für den Fall, daß dieser Wert größer als MaxS ist, als neues Maximum der ersten Ableitung A gemerkt. Damit enthält die Variable MaxI am Ende der Zählschleife 63 die Nummer jenes Sensors 11, bei dem die erste Ableitung A [MaxI] maximal ist.

Nach vollständigem Durchlauf aller Schleifendurchgänge der Zählschleife 63 erfolgt eine Abfrage 67, in der bestimmt wird, wo die zweite Ableitungsfunktion A2 einen Vorzeichenwechsel aufweist. Anschließend wird ein Wendepunkt W aus den zweiten Ableitungen A2 beidseits des Vorzeichenwechsels durch lineare Interpolation zwischen diesen beiden Werten im Schritt 68 berechnet. Schließlich wird der berechnete Wendepunkt W im abschließenden Ausgabeschritt 69 in digitaler Form ausgegeben und in einen Analogenwert gewandelt.

Alternativ könnte der Wendepunkt W auch durch Interpolation einer nicht linearen Funktion, beispielsweise einem Polynom höheren Grades, berechnet werden, wodurch sich die Genauigkeit der Wendepunktsberechnung 68 entsprechend verbessert. Außerdem ist es denkbar, anstatt einer Interpolation auch eine Approximation einer Fitfunktion mit der Methode der Minimierung der quadratischen Abstände der Fitfunktion von den gespeicherten Werten S, A oder A2 vorzunehmen. Auf diese Weise haben Fehler der Signale S einen entsprechend geringeren Einfluß auf die Bestimmung des Wendepunktes W.

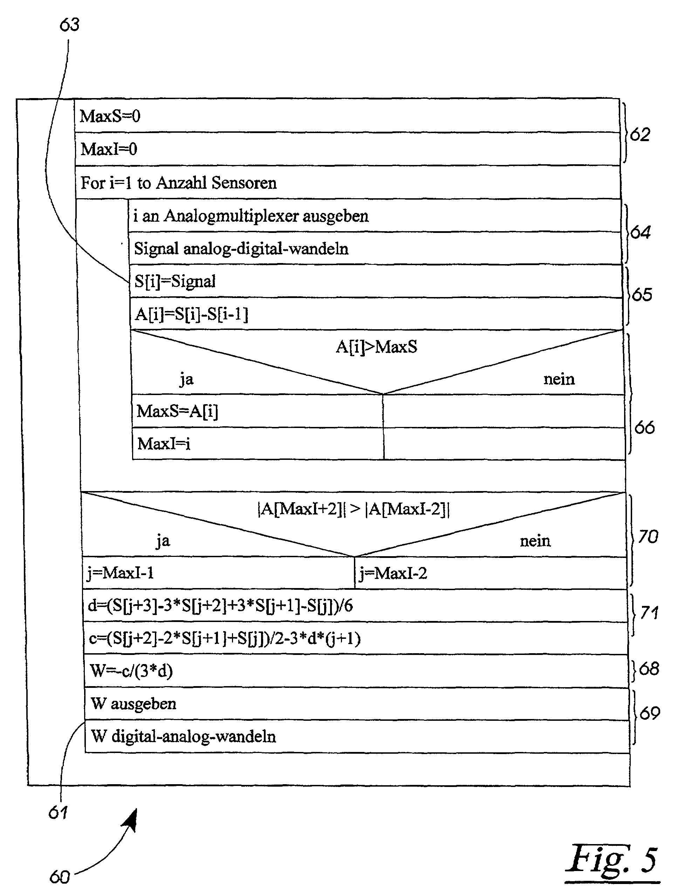

Figur 5 zeigt einen alternativen Algorithmus 60, der in den Schritten 62 bis 66 mit der Maßgabe übereinstimmt, daß die zweite Ableitung A2 nicht berechnet wird. Nach Durchlauf aller Schleifendurchgänge 63 erfolgt eine Abfrage 70, in der jene Seite des gefundenen Maximums der Ableitungsfunktion A bestimmt wird, auf der die Ableitungsfunktion A am größten ist. Anschließend wird ein Polynom dritten Grades durch Interpolation 71 an vier aufeinanderfolgenden Werten S der gespeicherten Signale bestimmt. Dieses Polynom hat dabei die allgemeine Form:

$$S = a + bx + cx^2 + dx^3.$$

Da der konstante a und der lineare Koeffizient b für die Berechnung des Wendepunktes W nicht benötigt werden, kann auf die Berechnung dieser Koeffizienten a, b bei der Interpolation 71 verzichtet und nur die Koeffizienten c, d berechnet werden. In einem Schritt 68 wird aus den Koeffizienten c und d der Wendepunkt W des Interpolationspolynoms berechnet. Der Ausgabeschritt 69 ist wiederum zum Algorithmus 60 gemäß Figur 4 identisch.

**Patentansprüche**

1. Verfahren zur Lageerfassung einer Kante (2) von einer laufenden Warenbahn (3), bei dem die Warenbahn (3) von mehreren, quer zur Warenlaufrichtung verteilten Sensoren (11) abgetastet wird, die jeweils ein von der Abdeckung durch die Warenbahn (3) abhängiges Signal (S) erzeugen, wobei ein digitales und/oder analoges Ausgangssignal abgegeben wird, **dadurch gekennzeichnet, daß** aus der Funktion (51) der von den Sensoren (11) erzeugten Signale (S) von zu den Sensororten proportionalen Werten ein Wendepunkt (W) ermittelt und das abgegebene Ausgangssignal zum ermittelten Wendepunkt (W) proportional ist.

2. Verfahren nach Anspruch 1, **dadurch gekennzeichnet, daß** der Sensor (11) über einen vorgegebenen Bereich quer zur Bahnlaufrichtung integriert.

**3.** Verfahren nach Anspruch 1 oder 2, **dadurch gekennzeichnet, daß** die Warenbahnabdeckung auf optischem, pneumatischem oder akustischem Wege erfaßt wird.

**4.** Verfahren nach mindestens einem der Ansprüche 1 bis 3, **dadurch gekennzeichnet, daß** der Wendepunkt (W) durch zweimaliges, numerisches Differenzieren (65) der von den Sensoren (11) erzeugten Funktion (51) der Signale (S) von zu den Sensororten proportionalen Werten bestimmt wird, wobei eine Nullstelle der ermittelten zweiten Ableitungsfunktion (A2) durch Interpolation oder Approximation (68) berechnet wird.

**5.** Verfahren nach mindestens einem der Ansprüche 1 bis 3, **dadurch gekennzeichnet, daß** der Wendepunkt (W) durch numerisches Differenzieren (65) der von den Sensoren (11) erzeugten Funktion (51) der Signale (S) von zu den Sensororten proportionalen Werten bestimmt wird, wobei das Maximum der ermittelten Ableitungsfunktion (A) durch Interpolation oder Approximation berechnet wird.

**6.** Verfahren nach mindestens einem der Ansprüche 1 bis 3, **dadurch gekennzeichnet, daß** der Wendepunkt (W) durch Interpolation oder Approximation (68) einer Fitfunktion an die von den Sensoren (11) erzeugte Funktion (51) der Signale (S) von zu den Sensororten proportionalen Werten bestimmt wird, wobei der Wendepunkt (W) aus den ermittelten Fitparametern (c, d) berechnet wird.

**7.** Verfahren nach Anspruch 6, **dadurch gekennzeichnet, daß** die Fitfunktion ein Polynom ist.

**8.** Verfahren nach mindestens einem der Ansprüche 1 bis 6, **dadurch gekennzeichnet, daß** das Signal (S) des Sensors (11) mit einem Signal (S) eines Referenzsensors skaliert wird, wobei beide Signale (S) zeitnah erfaßt werden.

**9.** Vorrichtung zur Lageerfassung einer Kante (2) einer laufenden Warenbahn (3), wobei die Vorrichtung (1) mehrere, quer zur Bahnlaufrichtung verteilte Sensoren (11) aufweist, die jeweils ein von der Bedeckung durch die Warenbahn (3) abhängiges Signal (S) erzeugen, und die über Schaltmittel (31) mit einem Analog-Digital-Umsetzer (37) in Wirkverbindung stehen, dem Speichermittel (40) zum Speichern der digitalisierten Werte (S) zugeordnet sind, **dadurch gekennzeichnet, daß** die Speichermittel (40) mit einem einen Wendepunkt (W) aus der Funktion (51) der digitalisierten Werte (S) von zu den Sensororten proportionalen Werten ermittelnder Wendepunkt-Detektor (39) in Wirkverbindung stehen.

**10.** Vorrichtung nach Anspruch 9, **dadurch gekennzeichnet, daß** der Sensor (11) eine aus lichtsammelndem Kunststoff bestehende Platte (15) aufweist, der ein Fotodetektor (12) zugeordnet ist, wobei den Sensoren (11) gegenüberliegend mindestens eine Lichtquelle (4) vorgesehen ist.

**11.** Vorrichtung nach Anspruch 10, **dadurch gekennzeichnet, daß** zwischen der Lichtquelle (4) und den Sensoren (11) ein Lichtstrahlen (5, 5') parallelisierendes Element (6) vorgesehen ist.

**12.** Vorrichtung nach mindestens einem der Ansprüche 9 bis 11, **dadurch gekennzeichnet, daß** die Schaltmittel (31) von mindestens einem Analogmultiplexer (31) gebildet sind, dem mindestens ein Strom-Spannungs-Wandler (35) nachgeordnet ist.

**13.** Vorrichtung nach mindestens einem der Ansprüche 9 bis 12, **dadurch gekennzeichnet, daß** die Sensoren (11) auf zumindest teilweise flexibel ausgebildeten Platinen (21) aufgebaut sind.

**14.** Vorrichtung nach mindestens einem der Ansprüche 9 bis 13, **dadurch gekennzeichnet, daß** der Wendepunktdetektor (39) und/oder der Analog-Digital-Umsetzer (37) durch mindestens einen Mikrocontroller (46) realisiert ist.

**15.** Vorrichtung nach mindestens einem der Ansprüche 9 bis 14, **dadurch gekennzeichnet, daß** dem Wendepunktdetektor (39) mindestens ein Digital-Analog-Umsetzer (44) nachgeordnet ist.

**Claims**

**1.** Method of detecting the position of an edge (2) of a moving product web (3), in which the product web (3) is scanned by a plurality of sensors (11) which are distributed transversely with respect to the product running direction and which each generate a signal (S) that depends on being covered by the product web (3), a digital and/or analogue output signal being emitted, **characterized in that** the function (51) of the signals (S) that are generated by the sensors (11) values proportional to the sensor locations is used to determine a point of inflection (W), and the output signal emitted is proportional to the point of inflection (W) determined.

**2.** Method according to Claim 1, **characterized in that** the sensor (11) is integrated over a predefined area transverse to the web running direction.

**3.** Method according to Claim 1 or 2, **characterized in that** the covering by the product web is registered in an optical, pneumatic or acoustic way.

**4.** Method according to at least one of Claims 1 to 3, **characterized in that** the point of inflection (W) is determined by twofold; numeric differentiation (65) of the function (51) of the signals (S) that are generated by the sensors (11) from values proportional to the sensor locations, a zero point of the second derivative function (A2) determined being calculated by means of interpolation or approximation (68).

**5.** Method according to at least one of Claims 1 to 3, **characterized in that** the point of inflection (W) is determined by numeric differentiation (65) of the function (51) of the signals (S) that are generated by the sensors (11) from values proportional to the sensor locations, the maximum of the derivative function (A) determined being calculated by means of interpolation or approximation.

**6.** Method according to at least one of Claims 1 to 3, **characterized in that** the point of inflection (W) is determined by means of interpolation or approximation (68) of a fit function to the function (51) of the signals (S) that are generated by the sensors (11) from values proportional to the sensor locations, the point of inflection (W) being calculated from the fit parameters (c, d) determined.

**7.** Method according to Claim 6, **characterized in that** the fit function is a polynomial.

**8.** Method according to at least one of Claims 1 to 6, **characterized in that** the signal (S) from the sensor (11) is scaled by a signal (S) from a reference sensor, the two signals (S) being registered contemporaneously.

**9.** Device for detecting the position of an edge (2) of a moving product web (3), the device (1) having a plurality of sensors (11) which are distributed transversely with respect to the web running direction and which each generate a signal (S) which depends on being covered by the product web (3), and which are operatively connected via switching means (31) to an analogue/digital converter (37), with which storage means (40) for storing the digitized values (S) are associated, **characterized in that** the storage means (40) are operatively connected to a point-of-inflection detector (39) which determines a point of inflection (W) from the function (51) of the digitized values (S) of values proportional to the sensor locations.

**10.** Device according to Claim 9, **characterized in that** the sensor (11) has a plate (15) that consists of light-collecting plastic which is associated with a photodetector (12), at least one light source (4) being provided opposite the sensors (11).

**11.** Device according to Claim 10, **characterized in that** an element (6) which collimates light beams (5, 5') is provided between the light source (4) and the sensors (11).

**12.** Device according to at least one of Claims 9 to 11, **characterized in that** the switching means (31) are formed by at least one analogue multiplexer (31), downstream of which at least one current/voltage converter (35) is arranged.

**13.** Device according to at least one of Claims 9 to 12, **characterized in that** the sensors (11) are constructed on circuit boards (21) which are of at least partially flexible design.

**14.** Device according to at least one of Claims 9 to 13, **characterized in that** the point-of-inflection detector (39) and/or the analogue/digital converter (37) are/is implemented by means of at least one microcontroller (46).

**15.** Device according to at least one of Claims 9 to 14, **characterized in that** at least one digital/analogue converter (44) is arranged downstream of the point-of-inflection detector (39).

**Revendications**

**1.** Procédé de détection de position d'un bord (2) d'un lé de marchandise (3), se déplaçant, dans lequel le lé de marchandise (3) est balayé par plusieurs capteurs (11) répartis transversalement par rapport au sens de déplacement de la marchandise, qui génère respectivement un signal (S) fonction du recouvrement par le lé de marchandise (3), un signal de sortie numérique et/ou analogique étant émis, **caractérisé en ce qu'**un point tournant (W) est déterminé à partir de la fonction (51) des signaux (S) des valeurs proportionnelles aux localisations générés par les capteurs (11) et le signal de sortie émis est proportionnel au point tournant (W) déterminé.

**2.** Procédé selon la revendication 1, **caractérisé en ce que** le capteur (11) intègre sur une plage donnée transversale au sens de déplacement du lé.

**3.** Procédé selon la revendication 1 ou 2, **caractérisé en ce que** le recouvrement par le lé de marchandise est détecté par voie optique, pneumatique ou acoustique.

**4.** Procédé selon au moins l'une des revendications 1 à 3, **caractérisé en ce que** le point tournant (W) est déterminé par double différenciation numérique (65) de la fonction (51) des signaux des valeurs proportionnels aux localisations des capteurs générée par les capteurs (11), un point zéro de la seconde fonction dérivée (A2) déterminée étant calculé par interpolation ou approximation (68).

5. Procédé selon au moins l'une des revendications 1 à 3, **caractérisé en ce que** le point tournant (W) est déterminé par différenciation numérique (65) de la fonction (51) des signaux (S) de valeurs proportionnelles aux localisations de capteurs générée par les capteurs (11), le maximum de la fonction dérivée (A) étant calculé par interpolation ou approximation.

6. Procédé selon au moins l'une des revendications 1 à 3, **caractérisé en ce que** le point tournant (W) est déterminé par interpolation ou approximation (68) d'une fonction d'approximation à la fonction (51) des signaux (S) de valeurs proportionnelles aux localisations de capteurs générée par les capteurs (11), le point tournant (W) étant calculé à partir des paramètres de l'approximation (c, d) déterminés.

7. Procédé selon la revendication 6, **caractérisé en ce que** la fonction d'approximation est un polynôme.

8. Procédé selon au moins l'une des revendications 1 à 6, **caractérisé en ce que** le signal (S) du capteur (11) est cadré avec un signal (S) d'un capteur de référence, les deux signaux (S) étant détectés en temps réel.

9. Dispositif de détection de détection de position d'un bord (2) d'un lé de marchandise (3), se déplaçant, dans lequel le lé de marchandise (3) est balayé par plusieurs capteurs (11) répartis transversalement par rapport au sens de déplacement de la marchandise, qui génèrent respectivement un signal (S) fonction du recouvrement par le lé de marchandise (3), et qui sont en liaison de coopération par l'intermédiaire de moyens de commutation (31) avec un convertisseur analogique-numérique (37), sont associés au moyen de mémorisation (40) pour mémoriser les valeurs numérisées (S), **caractérisé en ce que** les moyens de mémorisation (40) sont en liaison de coopération avec un détecteur de point tournant (39) déterminant un point tournant (W) à partir de la fonction (1) des valeurs numérisées (S) de valeurs proportionnelles aux localisations de capteurs.

10. Dispositif selon la revendication 9, **caractérisé en ce que** le capteur (11) présente une plaque (15) en matière plastique collectant la lumière, à laquelle est associé un détecteur photo-électrique (12), au moins une source de lumière (4) étant prévue en regard des capteurs (11).

11. Dispositif selon la revendication 10, **caractérisé en ce qu'**entre la source de lumière (4) et les capteurs (11) est prévu un élément (6) parallélisant des rayons lumineux (5, 5').

12. Dispositif selon au moins l'une des revendications 9 à 11, **caractérisé en ce que** les moyens de commutation (31) sont constitués d'au moins un multiplexeur analogique (31), en aval duquel est monté au moins un convertisseur de courant-tension (35).

13. Dispositif selon au moins l'une des revendications 9 à 12, **caractérisé en ce que** les capteurs (11) sont montés sur des platines (21) conçues flexibles au moins partiellement.

14. Dispositif selon au moins l'une des revendications 9 à 13, **caractérisé en ce que** le détecteur de point tournant (39) et/ou le convertisseur analogique-numérique (37) est constitué par au moins un microcontrôleur (46).

15. Dispositif selon au moins l'une des revendications 9 à 14, **caractérisé en ce qu'**en aval du détecteur de point tournant (39) est monté au moins un convertisseur analogique-numérique (44).

_Fig. 1_

_Fig. 3_

EP 1 058 087 B1

*Fig. 2*

EP 1 058 087 B1

63

| MaxS=0 | 62 |
| MaxI=0 | |
| For i=1 to Anzahl Sensoren | |

| | i an Analogmultiplexer ausgeben | 64 |
| | Signal analog-digital-wandeln | |
| | S[i]=Signal | |
| | A[i]=S[i]-S[i-1] | 65 |
| | A2[i]=A[i]-A[i-1] | |

A[i]>MaxS

| ja | | nein | 66 |

| MaxS=A[i] | |
| MaxI=i | |

A2[MaxI]*A2[MaxI-1]<0

| ja | | nein | 67 |

| W=MaxI-A2[MaxI]/ (A2[MaxI]-A2[MaxI-1]) | W=MaxI+1-A2[MaxI+1]/ (A2[MaxI+1]-A2[MaxI]) | 68 |

| W ausgeben | 69 |
| W digital-analog-wandeln | |

61

60

*Fig. 4*

| MaxS=0 | |
|---|---|
| MaxI=0 | |

For i=1 to Anzahl Sensoren

| i an Analogmultiplexer ausgeben |
|---|
| Signal analog-digital-wandeln |

| S[i]=Signal |
|---|
| A[i]=S[i]-S[i-1] |

| A[i]>MaxS | |
|---|---|
| ja | nein |
| MaxS=A[i] | |
| MaxI=i | |

| $|A[MaxI+2]| > |A[MaxI-2]|$ | |
|---|---|
| ja | nein |
| j=MaxI-1 | j=MaxI-2 |

d=(S[j+3]-3*S[j+2]+3*S[j+1]-S[j])/6

c=(S[j+2]-2*S[j+1]+S[j])/2-3*d*(j+1)

W=-c/(3*d)

W ausgeben

W digital-analog-wandeln

*Fig. 5*